**Europäisches Patentamt**

**European Patent Office**

**Office européen des brevets**

(19)

(11) Veröffentlichungsnummer: **0 016 461**
**B1**

(12)

# EUROPÄISCHE PATENTSCHRIFT

(45) Veröffentlichungstag der Patentschrift:
12.05.82

(51) Int. Cl.³: **C 08 F 14/06, C 08 F 2/20**

(21) Anmeldenummer: **80101445.7**

(22) Anmeldetag: **20.03.80**

(54) **Verfahren zur Polymerisation von Vinylchlorid nach dem Mikrosuspensionsverfahren.**

(30) Priorität: **22.03.79 DE 2911333**

(43) Veröffentlichungstag der Anmeldung:
**01.10.80 Patentblatt 80/20**

(45) Bekanntmachung des Hinweises auf die Patenterteilung:
**12.05.82 Patentblatt 82/19**

(84) Benannte Vertragsstaaten:
**DE FR GB IT SE**

(56) Entgegenhaltungen:
**keine**

(73) Patentinhaber: **WACKER-CHEMIE GMBH,**
**Prinzregentenstrasse 22, D-8000 München 22 (DE)**

(72) Erfinder: **Geschonke, Hans, Dr., Unterster Weg 51,**
**D-5024 Pulheim (DE)**
Erfinder: **Goetze, Ulrich, Dr., Raiffeisenstrasse 18,**
**D-5024 Pulheim (DE)**
Erfinder: **Kreilein, Kurt, Dr., Beethovenstrasse 21,**
**D-5024 Pulheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Polymerisation von Vinylchlorid nach dem Mikrosuspensionsverfahren

Zur Herstellung von verpastbarem Polyvinylchlorid wird oftmals Vinylchlorid nach dem Mikrosuspensionsverfahren polymerisiert. Gemäß diesem Verfahren wird das Vinylchlorid zusammen mit den monomerlöslichen Radikalbildnern und Emulgatoren in Wasser vor der Polymerisation sehr stark homogenisiert und anschließend mit oder ohne Rühren der Polymerisation unterworfen. Die dabei entstehenden Polyvinylchloridlatices sind nicht sehr stabil und neigen zur Koagulation und Grießbildung. Dieses Problem der Instabilität hat durch verschärfte Umweltschutzauflagen zunehmende Bedeutung gewonnen, da nach der Polymerisation zur weitgehenden Entfernung des Vinylchlorids sogenannte Intensiventgasungen durchgeführt werden müssen, um unpolymerisiertes Vinylchlorid aus den Latices zu entfernen. Diese Entgasungsverfahren stellen Belastungen für den Latex dar und führen oftmals zu weiterer Koagulation.

Dieses Problem kann dadurch gelöst werden, daß Emulgatoren mit besserer Emulgierwirkung oder höhere Emulgatorkonzentrationen eingesetzt werden. Dies führt jedoch dazu, daß die Qualität des Pastenpolyvinylchlorids sinkt, beispielsweise wird die Wasseraufnahme des Fertigproduktes durch derartige Maßnahmen erhöht. Gerade Emulgatoren mit bescheidener Emulgierwirkung, wie z. B. die Alkali- oder Ammoniumsalze von Carbonsäuren, bringen ausgezeichnete Pastenpolyvinylchloridprodukte zur Herstellung besonders transparenter und wasserresistenter Beschichtungen. Ein weiterer Ansatz, dieses Problem zu lösen, bestand darin, zusätzlich zu den Emulgatoren Schutzkolloide zu verwenden. Dies führt zwar auch zu stabileren Latices, beeinträchtigt jedoch ebenfalls die Qualität des entstehenden Polyvinylchlorids. So werden beispielsweise damit die Viskositäten der Polyvinylchloridpasten erhöht. Diese Viskositätserhöhung ist jedoch vom Verarbeiter der Paste nicht erwünscht.

Aufgabe der Erfindung war es daher, Zusatzstoffe für die Mikrosuspensionspolymerisation von Polyvinylchlorid zu finden, die einerseits eine Stabilisierung des Polyvinylchloridlatex bewirken, die aber andererseits keine negativen Einflüsse auf das Endprodukt Pastenpolyvinylchlorid haben.

Gegenstand der Erfindung ist ein Verfahren zur Herstellung von Polyvinylchlorid nach dem Mikrosuspensionsverfahren durch Polymerisation von Vinylchlorid, gegebenenfalls mit weiteren alpha-olefinisch ungesättigten Monomeren bis zu 20 Gewichtsprozent des Vinylchloridgehaltes, mit monomerlöslichen Radikalbildnern unter Verwendung von Emulgatoren und gegebenenfalls weiteren üblichen Hilfsstoffen in vorhomogenisierter wäßriger Phase, dadurch gekennzeichnet, daß 0,01 bis 0,5 Gewichtsprozent, bezogen auf Wasser, Polymerisate, enthaltend ein- oder zweibasige Carbonsäuren und/oder deren Salze, mitverwendet werden.

In einer bevorzugten Ausführungsform werden als Emulgatoren 0,3 bis 3 Gewichtsprozent, bezogen auf Wasser, an Alkali- und/oder Ammoniumcarbonsäuren mit 8 bis 20 Kohlenstoffatomen eingesetzt.

Das Mikrosuspensionsverfahren ist vielfach in der Literatur beschrieben, z. B. in DE-AS 1 069 387. Aus dem Monomeren, dem öllöslichen Katalysator, den Emulgatoren oder weiteren Hilfsstoffen, wie z. B. Puffersubstanzen, sowie mit Wasser wird eine sehr feinteilige Monomerdispersion erzeugt. Diese wird dann bei Temperaturen zwischen etwa 30 und 80°C, üblicherweise unter autogenem Druck der Monomeren von etwa 5 bis 13 bar, polymerisiert. Die Voremulgierung kann durch verschiedene Apparaturen, beispielsweise Kolloidmühlen, schnellaufende Pumpen, Vibratorrührer, Ultraschallgeräte, Düsen, schnellaufende Rührer, die die Ansatzmischung auf Prallflächen schleudern, erreicht werden.

Als Katalysatoren kommen öllösliche Radikalbildner in Mengen von 0,01 bis 3 Gewichtsprozent, vorzugsweise 0,02 bis 0,3 Gewichtsprozent, bezogen auf Monomere, in Frage. Beispiele sind Dialkyl-, Diaryl- oder Diacylperoxide, wie z. B. Dilauroyl-, Dimyristyl-, Dicetyl- oder Distearylperoxid; Perester, wie z. B. tert.-Propylperacetat, tert.-Butylperacetat, tert.-Butylperoctoat, tert.-Butylperpivalat; Dialkylperoxidicarbonate, wie z. B. Diisopropyl-, Diäthyl-, Dihexyl-, Dicyclohexyl-, Dialkylcyclohexylperoxidicarbonat, Bis-(4-tert.-butylcyclohexyl)-peroxidicarbonat, insbesondere Dialkylperoxidicarbonate mit Alkylkettenlängen von $C_8$ bis $C_{18}$; gemischte Anhydride von organischen Sulfopersäuren und organische Säuren, wie z. B. Acetylcyclohexylsulfonylperoxid, sowie als Polymerisationsinitiatoren bekannte Azoverbindungen, wie z. B. Azoisobuttersäurenitril und Azovaleronitril. Auch Gemische der Radikalbildner werden vielfach verwendet.

Als Emulgatoren kommen prinzipiell eine Vielzahl verschiedener Typen in Frage. Sie werden meistenteils in Mengen von 0,1 bis 5 Gewichtsprozent, bezogen auf Wasser, vorzugsweise 0,3 bis 3 Gewichtsprozent, eingesetzt. Es können sowohl ionogene wie auch nichtionogene Emulgatoren verwendet werden. Bei den ionogenen Emulgatoren kommen vorzugsweise anionenaktive Substanzen in Frage, so z. B. Alkylsulfonate, Alkylsulfate, wie beispielsweise Natriumdodecylsulfat, Phosphorsäurealkylester, wie z. B. diäthylhexylphosphorsaures Natrium. Bevorzugt sind jedoch die Alkali-, insbesondere Natrium- und Kalium-, und/oder Ammoniumsalze von Fettsäuren mit 8 bis 20 Kohlenstoffatomen. Dabei können die Fettsäuren substituiert sein, insbesondere mit Hydroxylgruppen. Oftmals werden derartige Produkte durch Oxydation von ungesättigten Fettsäuren, z. B. mit Peressigsäure, hergestellt. Beispiele für nichtionische Emulgatoren sind Teilfettsäureester mehrwertiger Alkohole, wie Glycerinmonostearat, Sorbitmonolaurat oder -palmitat, Teilfettalkoholäther mehrwertiger Alkohole, Polyoxyäthylenäther von Fettalkoholen oder aromatischen Hydroxylverbindungen sowie Polyäthylenoxid- und/oder Polypropylenoxidkondensationsprodukte.

Weitere Hilfsstoffe sind z. B. Puffersubstanzen, wie Natriumcarbonat, Natriumbicarbonat, Alkaliacetate, Alkaliphosphate oder Molekulargewichtsregler, wie aliphatische Aldehyde, Chlorkohlenwasserstoffe, Isobutylen.

Die Erfindung ist auch auf Copolymerisate anwendbar, die bis zu 20 Gewichtsprozent alpha-äthylenisch ungesättigte Monomere enthalten. Beispiele derartiger Monomere sind Vinylhalogenide, wie z. B. Vinylfluorid, Vinylbromid, Vinylidenfluorid, Vinylidenchlorid; Vinylester von organischen Säuren mit 2 bis 18 C-Atomen, insbesondere Vinylacetat, Vinylpropionat, Vinyllaurat; Acrylverbindungen, insbesondere Acrylester; Fumarsäuremono- und -diester, Maleinsäuremono- und -diester.

Die Polymerisation kann in üblichen Autoklaven durchgeführt werden, wobei sowohl Rührautoklaven wie auch Autoklaven ohne Rühreinrichtungen in Frage kommen.

Der erfindungsgemäße Zusatz von Polymerisaten, die ein- oder zweibasige Carbonsäuren und/oder deren Salze einpolymerisiert enthalten, erfolgt im allgemeinen zur wäßrigen Flotte vor der Homogenisierung des Gesamtansatzes. Beispiele solcher Polymerisate sind Homo- und Copolymerisate aus Acrylsäure, Methacrylsäure, Fumarsäure, Maleinsäure bzw. deren Anhydride, Itaconsäure und Copolymerisate der genannten Säuren mit bis zu 80 Gewichtsprozent an anderen olefinisch ungesättigten Monomeren. Beispiele solcher Comonomeren sind Styrol, Olefine, wie z. B. Äthylen oder Propylen, Vinylester, wie z. B. Vinylacetat, Vinyläther, wie z. B. Methylvinyläther, Vinyloctadecyläther. Bei den Copolymeren soll auf 5 Einheiten Comonomeres mindestens 1 Einheit mit Carbonsäuregruppen entfallen. Die obere Grenze stellt oftmals zwei Carbonsäuregruppen pro einer Comonomereinheit dar. Bevorzugt sind Copolymere, die zwei Monomereinheiten pro Carbonsäuregruppe enthalten, bis Copolymere, die eine Monomereinheit auf 1,5 Carbonsäuregruppen enthalten. Vielfach zur Anwendung kommen oftmals sogenannte 1 : 1-Copolymere, das heißt Copolymere, bei denen pro Carbonsäuregruppeneinheit eine Comonomereinheit enthalten ist. Beispiele solcher Copolymeren mit 1 : 1-Verhältnissen sind Maleinsäureanhydridcopolymere mit Styrol, Äthylen, Vinylmethyläther. Die Maleinsäureanhydridcopolymeren ergeben in Wasser eine Aufspaltung der Anhydridgruppe zu den entsprechenden bifunktionellen Carbonsäureeinheiten. Gegebenenfalls können natürlich auch noch einige Maleinsäureanhydrideinheiten nicht aufgespalten vorliegen. Ein weiteres erwähnenswertes Polymeres mit Carbonsäuregruppen ist die Polyacrylsäure. Meistenteils sind diese Polymeren aufgrund ihrer hohen Carbonsäuregruppenzahl wasserlöslich oder zumindest alkalilöslich. Bei der Lösung in Alkali entstehen die entsprechenden Alkalisalze, insbesondere Natrium-, Kalium- und Ammoniumsalze.

Der Zusatz dieser carbonsäuregruppenenthaltenden Polymerisate in Mengen von 0,01 bis 0,5 Gewichtsprozent, bezogen auf Wasser, hat ganz entscheidende Vorteile für die Mikrosuspensionspolymerisation. Die entstehenden Latices weisen eine ganz entscheidend verbesserte Stabilität auf. Im allgemeinen kann sogar der Emulgatoreinsatz gegenüber Normalmengen um 10 bis 20% gesenkt werden, ohne daß die notwendige Stabilitätsgrenze unterschritten wird. Vielmehr bewirkt der Zusatz, daß sich kein Grieß bildet, daß keine Koagulation, selbst unter verschärften Bedingungen bei der Entgasung, auftritt. Dies bedeutet eine entscheidende Ausbeuterhöhung an qualitativ hochwertigem Produkt. Insbesondere entscheidend für die Verwendbarkeit der Erfindung ist, daß die angegebenen Zusätze keinen negativen Einfluß auf die Produktqualität zeigen. So wird beispielsweise die Wasserresistenz nicht verschlechtert, sondern, wenn mit geringeren Emulgatormengen gefahren wird, sogar verbessert. Zudem lassen sich auch die Transparenzeigenschaften aufgrund des gesenkten Emulgatorgehaltes sowie die Viskositätseigenschaften der fertigen Plastisole verbessern. Überraschend ist zudem, daß die Polymerisation auch in üblichen Rührautoklaven durchgeführt werden kann, ohne dabei aufgrund der Scherwirkung des Rührers Gefahr zu laufen, ein Koagulieren der Latices zu bewirken. Der Vorteil der Rührautoklaven gegenüber rührerlosen Autoklaven besteht darin, daß durch die bessere Wärmeabfuhr eine erhöhte Raumzeitleistung erzielt werden kann.

Von besonderer Bedeutung ist die Erfindung im Zusammenhang mit Ammonium- und/oder Alkalicarbonsäureemulgatoren, da diese zwar sehr hochwertige Produkte liefern, jedoch aufgrund ihrer nur durchschnittlichen Emulgierwirkung hinsichtlich der Latexstabilität im Zusammenhang mit der Intensiventgasung bisher größte Probleme aufwarfen. Selbst bei diesen von der Emulgierwirkung her unbefriedigenden Emulgatoren kann durch den erfindungsgemäßen Zusatz in Rührautoklaven gearbeitet werden und noch eine Reduzierung der Emulgatoren erzielt werden. Ebenso kann die Vinylchloridentgasung problemlos durchgeführt werden.

Eine bevorzugte Ausführungsform der Erfindung besteht darin, daß zusätzlich ein Emulgator mit mindestens einer perfluorierten Alkylgruppe mit einer Kettenlänge von 6 bis 20 Kohlenstoffatomen eingesetzt wird. Der Emulgator kann sowohl anionisch wie kationisch wie auch nichtionisch sein. Er wird in Mengen von 0,001 bis 0,1, vorzugsweise 0,005 bis 0,05 Gewichtsprozent, bezogen auf Wasser, verwendet. Bereits diese geringen Mengen ermöglichen es, den Emulgatorgehalt des Mikrosuspensionsansatzes weiter zu reduzieren — im Maximalfall bis zu 50% —, ohne entscheidende Stabilitätseinbußen zu bewirken. Vielmehr können die gleichen vorteilhaften Wirkungen erzielt werden, die bereits beschrieben wurden, jedoch durch die weitere Senkung des Emulgatorgehaltes hinsichtlich der Produktqualität in noch deutlicherem Maße. Zudem zeigt sich auch, daß der fluorhaltige Zusatz eine wandbelagverhindernde Wirkung auf die Autoklaven ausübt. Beispiele solcher Zusatzstoffe mit perfluorierten Alkylketten sind Perfluoralkylsulfonate, Perfluorcarbonsäurealkoxylate, z. B. -äthoxylate, Perfluoralkylalkoxylate, quaternäre Ammoniumsalze von Perfluoralkylsulfonsäuren. Vorzugsweise haben deren Alkylketten eine Kettenlänge von 8 bis 18 Kohlenstoffatomen, und das Molekül trägt einen hydrophilen Rest, gegebenenfalls getrennt durch einen Kohlenwasserstoffrest. In der DE-OS 2 605 203 sind derartige Verbindungen ausführlich beschrieben.

Durch die erfindungsgemäßen Zusätze zeigen sich auch Vorteile hinsichtlich der Aufarbeitungsmöglichkeiten. Es gibt zwei grundsätzlich verschiedene Arbeitsweisen, um zu dem im Latex enthaltenen Polyvinylchlorid zu kommen. Zum einen wird der Latex gefällt und filtriert. Dadurch wird ein wesentlicher Teil der Zusatzstoffe, insbesondere der Emulgatoren, mit der flüssigen Phase entfernt, und das fertige Polyvinylchlorid enthält weniger Emulgator. Diese Aufarbeitungsweise ist zwar kostenintensiv, bringt jedoch ein hervorragendes Produkt hinsichtlich Transparenz und Wasserresistenz. Durch die erfindungsgemäßen Maßnahmen wird, nachdem noch weniger Emulgator eingesetzt wird, ein noch besseres Produkt erzielt.

Zum anderen wird der Latex entweder sprüh- oder walzengetrocknet. Dabei verbleiben die Zuschlagstoffe im Endprodukt. Dies bedeutet normalerweise gegenüber der vorher erwähnten Aufarbeitung eine Qualitätsminderung, jedoch ist die Aufarbeitung als solche einfacher. Durch die erfindungsgemäßen Zusätze kann, wie beschrieben, der Emulgatorgehalt so weit gesenkt werden, daß selbst mit der vereinfachten Aufarbeitungsweise Produkte erzielt werden können, die nach dem bisher bekannten Stand der Technik nur mit der Aufarbeitung über Filtration erreichbar waren. Nachdem die Aufarbeitung außerdem Einfluß auf die Teilchengrößenverteilung des fertigen Polyvinylchlorids hat, ist durch die nunmehr mögliche Variation der Aufarbeitung auch bei Qualitätsprodukten eine gezieltere Teilchengrößenverteilung erreichbar.

### Vergleichsbeispiel A

Eine Mischung aus 5000 kg Vinylchlorid, 6000 l wäßriger Flotte, die 60 kg Ammoniumlaurat enthält und 9 kg Dilauroylperoxid, wird homogenisiert, indem man sie mit einem Druck von 20 bar über mehrstufige Kreiselpumpen durch Düsen drückt. Die anfallende Emulsion wird in einen rührerlosen Autoklaven gefüllt.

Nach 20stündiger Reaktion bei 50° C und anschließender Entgasung bis zu einem Rest-Monomerengehalt von 10 000 ppm Vinylchlorid (bezogen auf Feststoff) erhält man einen stabilen Latex mit 42% Feststoffgehalt. Wird dieser Latex durch Filtration, anschließende Trocknung und Sichtung aufgearbeitet, so erhält man ein Pulver, das sich mit Dioctylphthalat zu einem niedrigviskosen Plastisol anrühren läßt (vergleiche Tabelle II).

### Vergleichsbeispiel B

Es wird in gleicher Weise verfahren mit dem Unterschied, daß der Latex mittels Wasserdampf intensiver entgast wird bis zu einem Rest-Monomerengehalt von 500 − 1000 ppm Vinylchlorid. Die Stabilität ist stark reduziert, so daß Koagulationserscheinungen auftreten können, die eine Filtration unmöglich machen.

### Vergleichsbeispiel C

Ein gemäß Vergleichsbeispiel A polymerisierter Latex mit 78 kg Ammoniumlaurat wird gemäß Vergleichsbeispiel B entgast. Der Latex ist ausreichend stabil, wenn er auch nicht die Qualität gemäß Vergleichsbeispiel A erreicht. Die Filtration ist ohne Probleme möglich.

### Beispiel 1

Die Polymerisation wird gemäß Vergleichsbeispiel A mit 60 kg Ammoniumlaurat als Emulgator und zusätzlich 1,5 kg eines alternierenden Copolymeren aus Styrol und Maleinsäureanhydrid in ammoniakalischer Lösung durchgeführt. Der Latex ist nach der Intensiventgasung gemäß Vergleichsbeispiel B ebenso stabil wie der gemäß Vergleichsbeispiel A mit normaler Entgasung.

### Beispiel 2

Die Polymerisation wird gemäß Beispiel 1 durchgeführt, die wäßrige Flotte enthält 48 kg Ammoniumlaurat und, wie im Beispiel 1, 1,5 kg eines alternierenden Copolymeren aus Styrol und Maleinsäureanhydrid. Die Stabilität des Latex ist ebenso gut wie gemäß Beispiel 1.

4

## Beispiel 3

Die Polymerisation wird wie in den Beispielen 1 und 2 durchgeführt, die wäßrige Flotte enthält 36 kg Ammoniumlaurat, 1,5 kg eines alternierenden Copolymeren aus Styrol und Maleinsäureanhydrid und 1,5 kg einer 30%igen Lösung von Natriumperfluoralkylsulfonat (»Monflor® 31« der Fa. Atlas-Chemie).

Trotz der reduzierten Emulgatormenge ist keine Verminderung der Latexstabilität bei der Intensiventgasung festzustellen. Die Menge von Polymerisatablagerungen ist deutlich geringer als bei Chargen ohne den Zusatz des Fluortensids.

## Vergleichsbeispiel D

Die Beispiele 1 und 2 werden dahingehend abgewandelt, daß als Schutzkolloid 1,5 kg Methylcellulose verwendet wird. Die Stabilität des Latex nach der Intensiventgasung ist unverändert gut. Die Viskosität eines Plastisols aus dem nach dieser Rezeptur hergestellten Polyvinylchloridpulvers ist gegenüber den Vergleichsbeispielen A, B und C sowie den Beispielen 1 bis 3 wesentlich erhöht (vergleiche Tabelle II).

## Vergleichsbeispiel E

Die Änderung gegenüber Vergleichsbeispiel D besteht darin, daß anstelle von Methylcellulose Polyvinylalkohol verwendet wird, die Viskosität eines aus dem Polyvinylchloridpulver hergestellten Plastisols ist ebenso hoch wie beim Vergleichsbeispiel D (vergleiche Tabelle II).

## Vergleichsbeispiel F

Eine Mischung aus 900 kg Vinylchlorid, 1000 l wäßriger Flotte, die 10 kg Ammoniumlaurat enthält, und 2 kg Dilauroylperoxid wird gemäß Vergleichsbeispiel A homogenisiert und in einen Rührautoklaven gefüllt. Nach 10stündiger Reaktion bei 50°C und schonender Rührung ist die Polymerisation beendet. Unabhängig vom nachfolgenden Entgasungsverfahren enthält der gewonnene Latex 70% Grieß. Er ist somit für die weitere Aufarbeitung unbrauchbar.

Es wurde kein Weg gefunden, durch Änderung der Rührbedingungen einen brauchbaren Latex herzustellen.

## Beispiel 4

In Anlehnung an Vergleichsbeispiel F wurden 0,5 kg eines alternierenden Copolymeren aus Styrol und Maleinsäureanhydrid in ammoniakalischer Lösung zusätzlich eingesetzt. Bei schonender Rührung fällt nach der Polymerisation ein praktisch grießfreier Latex an. Aus den Polymerisationszeiten ergibt sich für den Rührautoklaven gegenüber den rührerlosen Autoklaven eine Verdoppelung der Raumzeitleistung.

## Vergleichsbeispiel G

Eine Mischung aus 850 Teilen Vinylchlorid, 850 Teilen wäßriger Flotte, die 1% Natriumlaurylsulfat enthält, und 2 Teilen Dilauroylperoxid wird homogenisiert, indem sie dreimal hintereinander mit einem Druck von 18 bar durch eine Lochdüse gedrückt wird. Die entstehende Emulsion wird in einen rührerlosen Autoklaven gefüllt und die Polymerisation bei 50°C durchgeführt. Nach der Intensiventgasung fällt ein stabiler Latex an.

## Beispiel 5

Die Rezeptur des Vergleichsbeispiels G wird dahingehend abgewandelt, daß die Emulgatormenge auf die Hälfte reduziert wird, zusätzlich jedoch 0,05%, bezogen auf die wäßrige Flotte, eines Copolymeren aus Polymethylvinyläther und Maleinsäureanhydrid und 0,03% einer 30%igen Lösung von Natriumfluoralkylsulfonat eingesetzt werden (Produktbezeichnung »Gantrez® AN« der Fa. GAF). Nach der Intensiventgasung ist die Latexstabilität gut.

### Beispiel 6

Eine Mischung aus 850 Teilen Vinylchlorid, 850 Teilen wäßriger Flotte, die 0,5% Natriumlaurylsulfat, 0,05% Polyacrylsäure (Produktbezeichnung »Rohagit® S« der Fa. Röhm) sowie 0,01% Perfluoralkyl-Polyäthylenoxid-Perfluoralkylat (»Monflor® 51« der Fa. Atlas-Chemie) und 2 Teile Dilauroylperoxid enthält, wird gemäß Vergleichsbeispiel G homogenisiert. Die Latexstabilität nach der Intensiventgasung ist gut.

### Vergleichsbeispiel H

Das Vergleichsbeispiel G wird dahingehend abgewandelt, daß anstelle von Natriumlaurylsulfat als Emulgator Natriumalkylarylsulfonat verwendet wird. Die Stabilität des Latex nach der Intensiventgasung ist gut.

### Beispiel 7

Die Rezeptur des Vergleichsbeispiels H wird dahingehend abgewandelt, daß die Emulgatormenge auf die Hälfte reduziert wird, zusätzlich jedoch, bezogen auf wäßrige Flotte, 0,05% eines alternierenden Copolymeren aus Styrol und Maleinsäureanhydrid in ammoniakalischer Lösung eingesetzt wird. Die Stabilität des Latex nach der Intensiventgasung ist ausreichend.

### Beispiel 8

Zusätzlich zur Rezeptur gemäß Beispiel 7 wird, bezogen auf wäßrige Flotte, 0,01% Perfluorcarbonsäure-Polyäthylenoxid (»Monflor® 51« der Fa. Atlas-Chemie) eingesetzt. Die Stabilität des Latex nach der Intensiventgasung ist gut.

Tabelle I

| Vergleichs-beispiel/ Beispiel Nr. | Autoklav | Emulgator Gew.-% | Schutzkolloid bzw. erfindungsgemäßer Zusatz Gew.-% | Fluortensid Gew.-% | Latexstabilität | Entgasung |
|---|---|---|---|---|---|---|
| A | ohne Rührer | 1 | — | — | gut | normal |
| B | dto. | 1 | — | — | schlecht | intensiv |
| C | dto. | 1,3 | — | — | ausreichend | dto. |
| 1 | dto. | 1 | 0,025 PS/MSA | — | gut | dto. |
| 2 | dto. | 0,8 | dto. | — | gut | dto. |
| 3 | dto. | 0,6 | dto. | 0,01 MF 31 | gut | dto. |
| D | dto. | 0,8 | 0,025 MC | — | gut | dto. |
| E | dto. | 0,8 | 0,025 PVA | — | gut | dto. |
| F | mit Rührer | 1 | — | — | nur Grieß | — |
| 4 | dto. | 1 | 0,05 PS/MSA | — | gut | intensiv |
| G/H | ohne Rührer | 1 | — | — | gut | dto. |
| 5 | dto. | 0,5 | 0,05 PMVÄ/MSA | 0,01 MF 31 | gut | dto. |
| 6 | dto. | 0,5 | 0,05 PAS | 0,01 MF 51 | gut | dto. |
| 7 | dto. | 0,5 | 0,05 PS/MSA | — | ausreichend | dto. |
| 8 | dto. | 0,5 | PS/MSA | 0,01 MF 51 | gut | dto. |

PS/MSA = 1 : 1-Copolymer aus Styrol und Maleinsäureanhydrid.
MC = Methylcellulose.
PVA = Polyvinylalkohol.
PMVÄ/MSA = 1 : 1-Copolymer aus Polymethylvinyläther und Maleinsäureanhydrid.
PAS = Polyacrylsäure.
MF = »Monflor®«.

0 016 461

Tabelle II

Viskosität eines Plastisols aus 100 Teilen Polyvinylchlorid und 65 Teilen Dioctylphthalat bei 25°C, gemessen im Rotationsviskosimeter ›Haake-Rotavisko‹

| Vergleichs-beispiel/ Beispiel Nr. | Viskosität in mPa · s bei Schergefälle D = | | | | |
|---|---|---|---|---|---|
| | 1.4 | 6.3 | 57.6 | 230 | 461 (sec⁻¹) |
| A | 1500 | 1500 | 2000 | 3000 | 5000 |
| B | 1600 | 1500 | 2200 | 3500 | 6000 |
| C | 1600 | 1600 | 2100 | 3200 | 5500 |
| 1 | 1400 | 1550 | 2050 | 3100 | 6200 |
| 2 | 1450 | 1600 | 2150 | 3150 | 5900 |
| 3 | 1550 | 1650 | 2200 | 3400 | 5700 |
| D | 8000 | 7000 | 4000 | 4500 | 6000 |
| E | 8500 | 7500 | 4000 | 4200 | 5500 |
| G | 2000 | 2000 | 3000 | 4000 | 6000 |
| 5 | 2500 | 2300 | 3500 | 5000 | 5600 |
| 6 | 2300 | 2100 | 3000 | 4000 | 5700 |
| H | 1800 | 2000 | 3100 | 5600 | 6000 |
| 7 | 2000 | 2200 | 3200 | 6000 | 5900 |
| 8 | 1900 | 2100 | 3000 | 5400 | 5800 |

Tabelle III

Restemulgatorgehalt im Endprodukt

| Vergleichsbeispiel/ Beispiel Nr. | Aufarbeitung | Rest-Emulgator % | Wasser- aufnahme, %*) |
|---|---|---|---|
| A, B, 1 | Filtration/Trocknung | 0,6 | 0,3 |
| A, B, 1 | Sprüh- oder Walzentrocknung | 1,2 | 1 |
| C | Filtration/Trocknung | 0,8 | 0,5 |
| 2 | dto. | 0,5 | 0,3 |
| 2 | Sprüh- oder Walzentrocknung | 1 | 1 |
| 3 | Filtration/Trocknung | 0,4 | 0,2 |
| 3 | Sprüh- oder Walzentrocknung | 0,7 | 0,4 |
| G, H | dto. | 1,1 | 1,1 |
| 5, 6, 8 | dto. | 0,6 | 0,3 |

*) Aus einer Paste, die aus 100 Gewichtsteilen Polyvinylchlorid und 65 Gewichtsteilen Dioctylphthalat besteht, wurde ein gelierter Film hergestellt. Nach 4-tägiger Lagerung im Wasser bei 23°C wird die prozentuale Gewichtszunahme (= Wasseraufnahme) bestimmt.

**Patentansprüche**

1. Verfahren zur Herstellung von Polyvinylchlorid nach dem Mikrosuspensionsverfahren durch Polymerisation von Vinylchlorid, gegebenenfalls mit alpha-olefinisch ungesättigten Monomeren bis zu 20 Gewichtsprozent des Vinylchloridgehaltes, mit monomerlöslichen Radikalbildnern unter Verwendung von Emulgatoren und gegebenenfalls weiteren Hilfsstoffen in vorhomogenisierter wäßriger Phase, dadurch gekennzeichnet, daß 0,01 bis 0,5 Gewichtsprozent, bezogen auf Wasser, Polymerisate, enthaltend ein- oder zweibasige Carbonsäuren und/oder deren Salze, mitverwendet werden.

2. Verfahren nach Anspruch 1, dadurch gekennzeichnet, daß als Emulgator 0,3 bis 3 Gewichtsprozent, bezogen auf Wasser, Alkali- und/oder Ammoniumcarbonsäuren mit 8 bis 20 Kohlenstoffatomen eingesetzt werden.

3. Verfahren nach Anspruch 1 und/oder 2, dadurch gekennzeichnet, daß zusätzlich 0,001 bis 0,1 Gewichtsprozent eines Emulgators mit mindestens einer perfluorierten Alkylgruppe einer Kettenlänge von 6 bis 20 Kohlenstoffatomen eingesetzt werden.

**Claims**

1. Process for the manufacture of polyvinyl chloride according to the microsuspension process by polymerization of vinyl chlorides, optionally with alpha-olefinically unsaturated monomers in amounts of up to 20% by weight of the vinyl chloride content, with monomer-soluble radical-initiators using emulsifiers, and optionally, further auxiliary substances in the pre-homogenized aqueous phase, characterized in that from 0.01 to 0.5% by weight, based on the water, of polymers containing monobasic or dibasic carboxylic acids and/or salts thereof are co-used.

2. Process according to claim 1, characterized in that from 0.3 to 3% by weight, based on the water, of alkali metal and/or ammonium carboxylic acids having from 8 to 20 carbon atoms are used as emulsifiers.

3. Process according to claim 1 and/or 2, characterized in that from 0.001 to 0.1% by weight of an emulsifier having at least one perfluorinated alkyl groups having a chain length of from 6 to 20 carbon atoms is additionally used.

9

**Revendications**

1. Procédé pour préparer du polychlorure de vinyle par la méthode en microsuspension, par polymérisation du chlorure de vinyle, éventuellement avec des monomères α-éthyléniques en une proportion pouvant aller jusqu'à 20% en poids de la teneur en chlorure de vinyle, en présence de générateurs de radicaux solubles dans le monomère, en utilisant des émulsionnants et, éventuellement, d'autres adjuvants, dans une phase aqueuse préalablement homogénéisée, procédé caractérisé en ce qu'on utilise, en outre, de 0,01 à 0,5% en poids, par rapport à l'eau, de polymères contenant des acides monocarboxyliques ou dicarboxyliques et/ou leurs sels.

2. Procédé selon la revendication 1, caractérisé en ce qu'on utilise, comme émulsionnants, de 0,3 à 3% en poids, par rapport à l'eau, de sels de métaux alcalins et/ou d'ammoniums d'acides carboxyliques contenant de 8 à 20 atomes de carbone.

3. Procédé selon les revendications 1 et/ou 2, caractérisé en ce qu'on utilise, en outre, de 0,001 à 0,1% en poids d'un émulsionnant porteur d'au moins un radical alkyle perfluoré ayant une longueur de chaîne de 6 à 20 atomes de carbone.